# DEMANDE DE BREVET EUROPEEN

(11) **EP 1 541 533 A1**
(43) Date de publication de la demande: **15.06.2005**
(21) Numéro de dépôt: 03447284.5
(22) Date de dépôt: 08.12.2003
(51) Int. Cl.: C02F 11/14, C10L 5/44, C10L 5/46

(54) **Procédé de séchage et agglomération de biomasse à faible teneur en matières sèches**

(71) Demandeur: Terval S.A., 4020 Liege (BE)
(72) Inventeur: Marenne, Daniel, 1348 Louvain-La-Neuve (BE); Blondiau, Benoît, 4053 Chaudfontaine (BE); Schmidt-Holzmann, Dirk, 40237 Düsseldorf (DE)
(74) Mandataire: Van Malderen, Michel

(57) **Abrégé**

La présente invention se rapporte à un procédé de traitement de déchets de biomasse à teneur en matières sèches inférieure à 40% en poids, de préférence à 30% en poids, tels que boues de station d'épuration, boues de dragage, gadoues de fosses sceptiques ou fèces animales, comprenant un séchage et une solidification sans apport d'énergie thermique extérieure de chauffage ou de combustion, caractérisé en ce que l'on mélange lesdits déchets de biomasse à :
- des particules minérales de taille inférieure à 100 microns, de préférence inférieures à 20 microns, et riches en calcaire, c'est-à-dire présentant une teneur en CaO comprise entre 5 et 40%, de sorte que lesdites particules représentent une fraction comprise entre 5 et 30% en poids du mélange ;
- des fines de charbon ou de lignite à raison de maximum 50% en poids du mélange.

## Description

### Objet de l'invention

La présente invention se rapporte à un nouveau procédé de traitement, en particulier de séchage et solidification, de déchets à faible teneur initiale en matières sèches tels que des boues d'épuration, des gadoues de fosses sceptiques ou des fèces animales.

### Etat de la technique

Les filières actuelles d'élimination de déchets à faible teneur en matières sèches sont connues pour soit être gourmandes en consommation d'énergie, comme par exemple dans le cas du séchage thermique, soit être problématiques pour l'environnement, comme par exemple dans le cas de la mise en décharge ou de l'épandage agricole (via chaulage ou compostage).

Par ailleurs, on connaît différentes sortes de ciments comme par exemple le ciment Portland, le ciment de haut-fourneau, etc. Ces ciments sont composés de clinker, de cendres volantes, de laitier et autres calcaires en diverses proportions pouvant être très variables. Le clinker Portland par exemple est obtenu à partir de quatre constituants principaux : la chaux (CaO), la silice (SiO₂), l'alumine (Al₂O₃) et l'oxyde de fer (Fe₂O₃). Les cimenteries sont établies à côté des sources de carbonate de calcium que sont les carrières de calcaire tendre ou dur. Le ciment est préparé dans un procédé de division poussée par broyage et homogénéisation de la matière première pour former une pâte ou une poudre, suivi d'une cuisson par voie humide ou sèche dans un four rotatif ou dans des cyclones successifs, dont la température peut aller jusqu'à 2000 °C, et où sont réalisées une déshydratation, une décarbonatation et une réaction physico-chimique de la matière première, appelée clinkérisation. Les fumées générées par le procédé contiennent des poussières pouvant être récupérées de manière aujourd'hui très performante sur des filtres électrostatiques ou sur des filtres à manches. L'utilisation de combustibles de substitution dans les fours de cimenterie enrichit les gaz de fumée en éléments tels que le chlore, le soufre ou autres éléments toxiques. Ceux-ci se retrouvent concentrés par un système de dérivation dans les poussières recueillies sur les filtres, dont l'élimination pose cependant un grave problème environnemental. Ces poussières, de par leur haute teneur en chlore notamment, ne peuvent être incorporées qu'en faible quantité dans la fabrication du clinker, du fait qu'on ne peut dépasser une teneur de 1000 ppm en chlore, suivant les réglementations en vigueur.

D'autre part, l'élimination de déchets organiques tels que boues de station d'épuration ou de dragage, déchets ménagers, fèces animales, etc., notamment par incinération ou mise en décharge, devient de plus en plus problématique du fait de l'apparition de réglementations de plus en plus sévères.

Malgré l'incorporation des cendres obtenues par incinération de tels déchets dans la fabrication d'éléments de construction par exemple, un pourcentage très important de celles-ci ne peut être recyclé et/ou valorisé.

L'utilisation des déchets de biomasse à faible teneur en matière sèche comme combustible de substitution nécessite le séchage préalable de ces déchets et la mise en forme adéquate par exemple par "bouletisation" (en anglais, "pelletisation"). Ce séchage nécessite un chauffage ou une combustion, donc un apport d'énergie, ce qui grève le prix de revient du procédé.

Le brevet européen EP-B-0 181 010 décrit un procédé de solidification de boues résiduaires mélangées à une faible quantité d'oxyde ou de sulfate de calcium, à un silicate de métal alcalin et à des agents durcisseurs organiques non phytotoxiques.

On connaît depuis longtemps des techniques de malaxage de boues contenant des toxiques avec des réactifs essentiellement hydrophiles en vue de former des composés solides par hydratation et de piéger lesdits toxiques. Le piégeage se fait notamment par formation de silicates de métaux lourds, par formation de gels grâce à des réactifs de réticulation, etc. Cependant, les boues traitées nécessitent généralement un lagunage pendant un certain temps, ce qui ne permet pas d'exclure certains risques de lixiviation. En outre, les produits utilisables, après séchage et stabilisation en construction routière ne présentent pas toujours des garanties suffisantes de stabilité à long terme.

### Définitions

La combustion d'un produit génère, entre autres, de l'eau à l'état de vapeur. Certaines techniques permettent de récupérer la quantité de chaleur contenue dans cette eau de combustion en la condensant (chaudières à condensation).

Ainsi, on définit le pouvoir calorifique supérieur (PCS) comme la variation de quantité de chaleur à pression ou volume constant lors de la réaction de combustion totale et à l'air de l'unité de masse d'un composé hydrocarboné avec formation d'eau sous forme de vapeur.

De plus, le pouvoir calorifique inférieur (PCI) est la variation de quantité de chaleur à pression ou volume constant lors de la réaction de combustion totale et à l'air d'un composé hydrocarboné avec formation d'eau sous forme liquide.

Le PCI se calcule en déduisant, par convention, du PCS la chaleur de condensation (2511 kJ/kg) de l'eau formée au cours de la combustion et éventuellement de l'eau contenue dans le combustible.

Enfin, le pouvoir calorifique d'un mélange est la somme des pouvoirs calorifiques de ses constituants, pondérés par la fraction massique de chaque constituant.

### Buts de l'invention

La présente invention vise à fournir une solution qui permette de s'affranchir des inconvénients de l'état de la technique.

En particulier, l'invention a pour but de proposer un procédé écologique de traitement et valorisation des déchets de biomasse à faible taux de matières sèches, qui permette notamment de respecter les réglementations en vigueur.

Ainsi, l'invention a pour but de fournir un procédé de traitement de ces déchets qui procure une valorisation plutôt que l'incinération directe ou la mise en décharge.

L'invention a pour but complémentaire de fournir un procédé de traitement des déchets susmentionnés se caractérisant par une consommation en énergie nettement moindre que dans les procédés de l'état de la technique tels que le séchage.

### Principaux éléments caractéristiques de l'invention

Un premier objet de la présente invention se rapporte à un procédé de traitement de déchets de biomasse à teneur en matière sèche inférieure à 40% en poids, de préférence à 30% en poids, tels que boues de station d'épuration, boues de dragage, gadoues de fosses sceptiques ou fèces animales, comprenant un séchage et une solidification sans apport d'énergie thermique extérieure de chauffage ou de combustion, caractérisé en ce que l'on mélange lesdits déchets de biomasse à :
- des particules minérales de taille inférieure à 100 microns, de préférence inférieures à 20 microns, et riches en calcaire, c'est-à-dire présentant une teneur en CaO comprise entre 5 et 40%, de sorte que lesdites particules représentent une fraction comprise entre 5 et 30% en poids du mélange ;
- des fines de charbon ou de lignite à raison de maximum 50% en poids du mélange.

Avantageusement, lesdites particules riches en calcaire sont soit des poussières de gaz de purge de fours à ciment ou à chaux récupérées de préférence sur des filtres électrostatiques ou des filtres à manches, soit des cendres volantes de lignite ou de charbon.

La procédé de l'invention est réalisé à température ambiante et en tout cas à une température inférieure à 50 °C.

Selon une caractéristique de l'invention, lesdits déchets de biomasse forment, après traitement, un combustible de substitution sous forme de granulés de taille comprise entre 0,75 et 50 mm, de préférence entre 5 et 25 mm, et/ou de résistance mécanique supérieure au moins à 2 kg/cm².

Toujours selon l'invention, lesdites fines de charbon ou de lignite ont un PCI compris entre 4000 et 8000 kcal/kg et lesdites boues ont un PCI compris entre 0 et 2000 kcal/kg.

Un deuxième objet de l'invention concerne un combustible de substitution obtenu par mise en oeuvre du procédé selon l'une quelconque des revendications précédentes, comprenant en agglomération dans le produit final :
- de 5 à 30 % de particules minérales riches en calcaire,
- de 30 à 90 % de matière sèche de déchets de biomasse,
- de 30 à 70 % de matière sèche de fines de charbon ou de lignite,
- de 0 à 5 % d'eau.

### Description détaillée de l'invention

La présente invention repose sur l'application de l'effet pouzzolanique au séchage et à la mise en forme adéquate de déchets de biomasse présentant une faible teneur en matières sèches. En effet, on connaît depuis l'Antiquité que le mélange de chaux vive avec des matériaux d'origine volcanique ou des tuiles d'argile concassées par exemple durcit aussi bien à l'air que sous l'eau, ce qui correspond à l'hydratation de la chaux vive pulvérulente en chaux éteinte (ou hydroxyde de calcium). De plus, le caractère fortement exothermique de la réaction permet l'élimination de l'humidité résiduelle dans le mélange.

L'association dans un mélange de boues et de poussières comprenant un pourcentage important de chaux, comme les poussières recueillies sur les filtres de four à ciment ou à chaux ou encore les cendres volantes de charbon et de lignite produites dans les centrales thermiques, permet l'obtention surprenante d'un produit contenant moins de 5% d'humidité, plus ou moins granulaire, voire poudreux et présentant une grande résistance mécanique. De plus, si l'on adjoint également au mélange des fines de charbon, on obtient un produit riche en énergie utilisable et valorisable comme combustible alternatif pour la production de chaleur ou d'électricité.

### Description d'une forme d'exécution préférée et avantages de l'invention

Le séchage des déchets à faible teneur en matière sèche selon l'invention ne nécessite aucune dépense d'énergie exogène car il est le résultat d'une réaction physico-chimique. L'association de ces déchets avec le charbon permet une première déshydratation importante et permet d'obtenir un produit séché ayant une valeur énergétique très intéressante, de nature à favoriser son utilisation.

Un premier avantage de la présente invention réside dans la seule utilisation des caractéristiques physico-chimiques de poussières riches en chaux.

Il s'agit d'un processus purement physico-chimique (an anglais, "pelletisation") et non thermique (séchage par apport de chaleur, combustion) qui permet d'obtenir un granulé aisément manipulable et désodorisé, dans la mesure où il contient moins de 5% d'humidité. De plus, le séchage étant réalisé à température ambiante, le procédé ne produit pas ou produit peu de dégagements gazeux nauséabonds.

Un deuxième avantage réside dans le fait que le processus mettant en oeuvre des poussières riches en chaux permet d'obtenir un granulé de grande résistance mécanique. Ces granulés sont obtenus sans ou à faible pression.

Enfin, selon un troisième avantage, le fait d'ajouter au mélange des fines de charbon améliore les caractéristiques thermiques du produit obtenu, ce qui génère un combustible d'utilisation simple. Le séchage par des moyens chimiques et mécaniques n'altère pas ou peu les caractéristiques thermiques du mélange, comme en attestent les deux exemples ci-après.

### EXEMPLE 1 : mélange avec charbon sud-africain

**Tableau 1**

| | *Charbon* | *Boues STEP* | *Poussière* | *Valeur Théorique* | *Valeur réelle* |
|---|---|---|---|---|---|
| *Proportion* | 45% (*) | 45% | 10% | | |
| *Matière sèche* | 90% | 25% | 100% | 61,75% | 97% |
| *PCI (kcal*/*kg)* | 5800 | 850 | 0 | 2993 | 4850 |
| *PCS (kcal*/*kg)* | 6600 | 5200 | 0 | 5310 | 5200 |

### EXEMPLE 2 : schlamm à haute humidité (résidus d'eau de lavoir)

**Tableau 2**

| | *Charbon* | *Boues STEP* | *Poussière de purge cimenterie* | *Valeur Théorique* | *Valeur réelle* |
|---|---|---|---|---|---|
| *Proportion* | 40% (*) | 40% | 20% | | |
| *Matière sèche* | 70% | 25% | 100% | 61,75% | 97% |
| *PCI (kcal*/*kg)* | 4000 | 850 | 0 | 1940 | 3000 |
| *PCS (kcal*/*kg)* | 6000 | 5200 | 0 | 4480 | 3300 |

| | | | | | |
|---|---|---|---|---|---|
| (*) les pourcentages sont exprimés en poids. | | | | | |

Le produit obtenu permet de régler un problème crucial dans le domaine du développement durable, celui de l'élimination propre des déchets à faible teneur en matière sèche tels que boues de station d'épuration ou fèces animales. L'aboutissement à un combustible de substitution permet, moyennant quelques précautions, d'éviter tout risque de lixiviation pour le sol et les nappes phréatiques.

Le procédé décrit ne nécessite pas d'investissement lourd, ni des frais de fonctionnement importants. Il constitue donc une solution rentable et écologique à un problème qui deviendra de plus en plus important dans les années à venir.

De plus, le procédé de l'invention permet de solutionner partiellement le problème de la reconversion de certains déchets gênants comme les poussières de fours de cimenterie ou de fours à chaux, par exemple riches en organo-chlorés ou en métaux lourds et présentant aussi un risque potentiel de lixiviation pour le sol et les nappes phréatiques.

Il permet aussi d'utiliser de manière optimale l'énergie contenue dans les biomasses avec élimination de l'eau par voie chimique et mécanique sans perte d'énergie. De plus, le mélange avec du charbon donne un produit final ayant un taux de cendres compatible avec les contraintes d'utilisation des charbons. Le combustible obtenu est un charbon écologique car, étant donné la présence importante de biomasse, la quantité de CO₂ produite lors de la cuisson est réduite.

## Revendications

1. Procédé de traitement de déchets de biomasse à teneur en matières sèches inférieure à 40% en poids, de préférence à 30% en poids, tels que boues de station d'épuration, boues de dragage, gadoues de fosses sceptiques ou fèces animales, comprenant un séchage et une solidification sans apport d'énergie thermique extérieure de chauffage ou de combustion, **caractérisé en ce que** l'on mélange lesdits déchets de biomasse à :
- des particules minérales de taille inférieure à 100 microns, de préférence inférieures à 20 microns, et riches en calcaire, c'est-à-dire présentant une teneur en CaO comprise entre 5 et 40%, de sorte que lesdites particules représentent une fraction comprise entre 5 et 30% en poids du mélange ;
- des fines de charbon ou de lignite à raison de maximum 50% en poids du mélange.

2. Procédé selon la revendication 1, **caractérisé en ce que** lesdites particules riches en calcaire sont des poussières de gaz de purge de fours à ciment ou à chaux récupérées de préférence sur des filtres électrostatiques ou des filtres à manches.

3. Procédé selon la revendication 1, **caractérisé en ce que** lesdites particules riches en calcaire sont des cendres volantes de lignite ou de charbon.

4. Procédé selon la revendication 1, 2 ou 3, **caractérisé en ce qu'**il est réalisé à température ambiante ou à une température inférieure à 50 °C.

5. Procédé selon l'une quelconque des revendications précédentes, **caractérisé en ce que** lesdits déchets de biomasse forment, après traitement, un combustible de substitution sous forme de granulés de taille comprise entre 0,75 et 50 mm, de préférence entre 5 et 25 mm, et/ou de résistance mécanique supérieure au moins à 2 kg/cm².

6. Procédé selon l'une quelconque des revendications précédentes, **caractérisé en ce que** lesdites fines de charbon ou de lignite ont un PCI compris entre 4000 et 8000 kcal/kg et lesdites boues ont un PCI compris entre 0 et 2000 kcal/kg.

7. Combustible de substitution obtenu par mise en oeuvre du procédé selon l'une quelconque des revendications précédentes, comprenant en agglomération dans le produit final :
- de 5 à 30 % de particules minérales riches en calcaire,
- de 30 à 90 % de matière sèche de déchets de biomasse,
- de 30 à 70 % de matière sèche de fines de charbon ou de lignite,
- de 0 à 5 % d'eau.
